# EUROPÄISCHE PATENTSCHRIFT

(11) **EP 0 681 702 B1**
(45) Veröffentlichungstag und Bekanntmachung des Hinweises auf die Patenterteilung: **22.04.1998**
(21) Anmeldenummer: 94904958.9
(22) Anmeldetag: 20.01.1994
(51) Int. Cl.: G01P 3/66, G01P 3/489

(54) **VERFAHREN ZUM BESTIMMEN DER GESCHWINDIGKEIT VON EISENBAHNFAHRZEUGEN, INSBESONDERE SOLCHEN MIT DREHGESTELLEN**
PROCESS FOR DETERMINING THE SPEED OF RAILWAY VEHICLES, IN PARTICULAR THOSE WITH BOGIES
PROCEDE PERMETTANT DE DETERMINER LA VITESSE DE VEHICULES DE CHEMIN DE FER, NOTAMMENT CEUX QUI SONT MUNIS DE BOGIES

(30) Priorität: 21.01.1993 DE 4302092
(43) Veröffentlichungstag der Anmeldung: 15.11.1995
(73) Patentinhaber: SIEMENS AKTIENGESELLSCHAFT, 80333 München (DE)
(72) Erfinder: LÜHRS, Peter, D-38114 Braunschweig (DE); WILMS, Gerhard, D-38102 Braunschweig (DE)
(86) Internationale Anmeldenummer: DE9400054
(87) Internationale Veröffentlichungsnummer: WO9417422

(56) Entgegenhaltungen:
- EP-A- 0 280 878
- EP-A- 0 288 952
- DE-A- 3 106 432
- DE-B- 2 800 373

## Beschreibung

Die Erfindung bezieht sich auf ein Verfahren nach dem Oberbegriff des Patentanspruches 1. Ein derartiges Verfahren ist im Zusammenhang mit einer Einrichtung zum Steuern einer Fahrsperre in Bahnanlagen aus der DE 31 06 432 C2 bekannt. Dort geschieht die Ermittlung der Geschwindigkeit von Bahnfahrzeugen unter Verwendung zweier im vorgegebenen Abstand entlang einer Strecke angeordneter und von den Bahnfahrzeugen beeinflußbarer Impulsgeber, wobei sich die jeweils gemessene mittlere Fahrgeschwindigkeit aus der Beziehung V=s:t ergibt, worin V die Geschwindigkeit, s den Abstand zwischen den Impulsgebern und t die Zeit angeben, welche die einzelnen Radsätze vom Passieren des ersten bis zum Passieren des zweiten Impulsgebers benötigen.

Die bekannte Einrichtung und das dort angewendete Verfahren zum Bestimmen der Geschwindigkeit von Eisenbahnfahrzeugen hat sich in der Praxis bewährt. Schwierigkeiten kann es allerdings dann geben, wenn die Fahrzeuge mit Magnetschienenbremsen oder Wirbelstrombremsen ausgerüstet sind, weil diese Bremsen in unerwünschter Weise die an der Strecke angeordneten Ereignismelder beeinflussen können. Die Behandlung von Fahrzeugen mit solchen Bremsen in Achszählanlagen und Anlagen zur Bestimmung der Geschwindigkeit vorüberlaufender Eisenbahnfahrzeuge ist deshalb so problematisch, weil die Bremsen nicht zwangsweise gleichartig auf die zum Detektieren von Radsätzen und zum Bestimmen von Vorrückgeschwindigkeiten verwendeten Ereignismelder einwirken. So kann es z. B. geschehen, daß eine derartige Bremse von einem ersten Ereignismelder als Befahrungsereignis detektiert wird, von einem zweiten jedoch nicht. Es ist auch möglich daß der eine Ereignismelder beim Passieren eines Fahrzeugs mit einer Bremse ein Befahrungsereignis und der andere zwei Befahrungsereignisse detektiert. Das Vorhandensein derartiger nicht durch Radachsen veranlaßter Ereignismeldungen führte bisher dazu, daß nur jeweils für die erste Achse eines derartigen Drehqestells die Vorrückgeschwindigkeit zuverlässig ermittelt werden konnte. Für alle übrigen Achsen eines Fahrzeugs bzw. Fahrzeugverbandes, die die Meßstrecke passieren, ist die Geschwindigkeitsbestimmung nicht mehr möglich, wenn durch unsymmetrische Beeinflussung der beiden Ereignismelder keine feste Zuordnung mehr gegeben ist zwischen den jeweils detektierten Ereignismeldungen und den sie verursachenden Fahrzeugachsen. Wünschenswert wäre es aber, die Vorrückgeschwindigkeit auch der übrigen Achsen eines Fahrzeugs oder eines Fahrzeugverbandes zu bestimmen, um so unterrichtet zu sein über die aktuelle Vorrückgeschwindigkeit dieses Fahrzeugverbandes. Würde dieser nämlich beschleunigen, so bestände ggf. die Notwendigkeit einer Zwangsbremsung vor einem Signal oder auch einer Langsamfahrstelle. Die Problematik der Störbeeinflussung durch Magnetschienenbremsen auf Achszähler ist bekannt (DE 38 42 882 A1). Zuverlässig wirkende Maßnahmen zur Unterdrückung des Störeinflusses magnetischer Bremsen oder Wirbelstrombremsen auf schienenseitige Ereignismelder gibt es derzeit noch nicht.

Aufgabe der Erfindung ist es, ein Verfahren nach dem Oberbegriff des Patentanspruches 1 anzugeben, mit dem es möglich ist, die Auswirkungen beliebiger Störungen auf schienenseitige Ereignismelder für die Geschwindigkeitsbestimmung der Achsen von Eisenbahnfahrzeugen, insbesondere solchen mit Drehgestellen, auszublenden.
Die Erfindung löst diese Aufqabe durch die kennzeichnenden Merkmale des Patentanspruches 1. Durch das nach der Erfindung mögliche Erkennen der beiden Achsen eines Drehgestelles bzw. der letzten Achse eines ersten und der ersten Achse eines zweiten Fahrzeugs ist es möglich, alle zwischen dem Vorüberlaufen dieser Radachsen ausgelösten Ereignismeldungen für die Auswertung unwirksam zu machen, soweit sie die Ereignismelder ungleich beeinflussen.

Vorteilhafte Ausgestaltungen und Weiterbildungen des erfindungsgemäßen Verfahrens sind in den Unteransprüchen angegeben.

So soll gemäß Anspruch 2 das für das Erkennen der jeweiligen Folgeachse eingeführte Zeitfenster variabel ausgeführt und der tatsächlichen Vorrückgeschwindigkeit des vorrückenden Fahrzeugs angepaßt sein. Auf diese Weise gelangt man zu einer an das tatsächliche Geschehen weitestgehend angepaßten Bewertung der Befahrungsereignisse.

Die Zuverlässigkeit der nach dem erfindungsgemäßen Verfahren ermittelten Geschwindigkeitswerte läßt sich beträchtlich erhöhen, wenn die gemessenen Zeitwerte gemäß Anspruch 3 einer Plausibilitätsprüfung unterzogen werden.

Als besonders vorteilhaft erweist es sich, wenn gemäß Anspruch 4 die Meßzeiten nicht von einer Flanke der Ereignismeldungen, sondern von ihrer jeweiligen Impulsmitte getriggert werden. Auf diese Weise lassen sich unterschiedliche Ansprechtoleranzen der Ereignismelder durch seitlich aus den Schienen mehr oder weniger weit auswandernde Fahrzeugräder vollständig kompensieren.

Die Erfindung ist nachstehend anhand der Zeichnung näher erläutert. Die Zeichnung zeigt in drei Darstellungen Impulsfolgen wie sie beim Vorüberlaufen eines zweiachsigen Drehqestelles an den Ereignismeldern einer Geschwindigkeitsmeßstrecke mit zwei Ereignismeldern beliebiger Bauart und Wirkungsweise bestehen, zusammen mit Ereignismeldungen, die radunabhängig sind und beispielsweise von Magnetschienenbremsen herrühren. Die einzelnen Ereignismeldungen sind jeweils mit einem Kennzeichen für das die Ereignismeldung veranlassende Ereignis und den das Ereignis registrierenden Ereignismelder bezeichnet. Die zu detektierenden Ereignisse stammen von den Rädern eines zweiachsigen Drehgestelles.

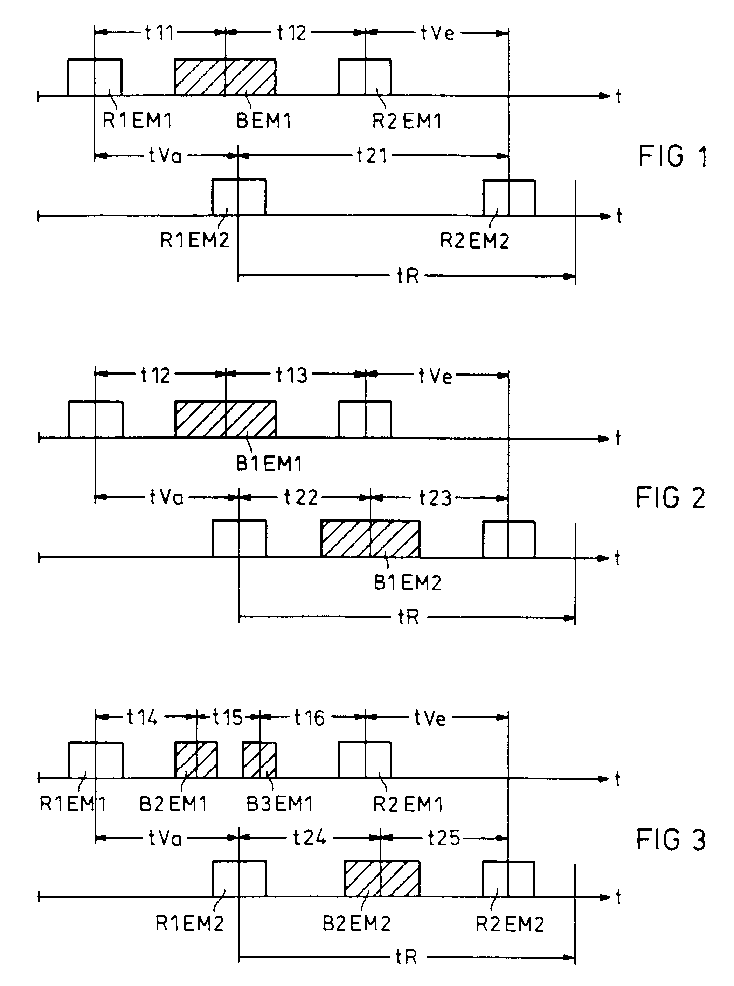

Aus den Darstellungen der Figur 1 ist zu entnehmen, daß zunächst das erste Rad R1 des Drehqestelles den ersten Ereignismelder E1 aktiviert, daß anschließend dieses Fahrzeugrad den zweiten Ereignismelder EM2 und daß die beiden Ereignismelder anschließend in der gleichen Reihenfolge von dem zweiten Radsatz R2 des Drehqestelles überlaufen werden. Der erste Ereignismelder EM1 soll zwischenzeitlich zwischen dem Vorüberlaufen des ersten und dem Vorüberlaufen des zweiten Fahrzeugrades ein weiteres Mal angesprochen haben als Folge des Vorüberlaufens einer Fahrzeugbremse. Diese Störbeeinflussung ist in der Zeichnung schraffiert hinterlegt und mit einem Kennzeichen B für das veranlassende Ereignis, die Bremse, und der Bezeichnung EM1 für den registrierenden Ereignismelder gekennzeichnet.

Das erfindungsgemäße Verfahren geht aus von der Erkenntnis, daß sich etwaige Störbeeinflussungen für die Geschwindigkeitsbestimmung eliminieren lassen, wenn es gelingt, eine eindeutige Zuordnung der Ereignismelaungen zu den auslösenden Ereiqnissen zu finden. Dies ist möglich für die erste und die letzte Achse eines jeden Drehgestelles. Das Erkennen der ersten Achse eines Drehqestelles ist absolut unkritisch, weil etwaige Störungen erst dann auf einen Ereignismelder einwirken, wenn diese erste Achse den Ereignismelder vollständig passiert hat. Die Ereignismeldungen der letzten Achse eines Drehgestelles lassen sich identifizieren, wenn man über die Länge des Drehgestelles Bescheid weiß. Aus diesem Grunde öffnet die erste in die Meßstrecke ein- oder aus ihr ausfahrende Achse eines jeden Drehgestells ein Zeitfenster tR, das so dimensioniert ist, daß es die zu erwartenden Ereignismeldungen der letzten Drehgestellachse einschließt. Dieses Zeitfenster kann eine konstante Zeitspanne beinhalten; vorteilhafter ist es jedoch, die Dauer des Zeit fensters an die aktuelle Geschwindigkeit des Fahrzeugs anzupassen und so zu dimensionieren, daß es sich kurz hinter den Ereignismeldungen der letzten Drehgestellachse schließt. Aus diesem Grunde ist vorgesehen, daß aus dem zeitlichen Versatz der von der ersten Drehgestellachse ausgelösten Ereignismeldungen und dem räumlichen Versatz der beiden Ereignismelder sowie der maximalen Länge von Drehgestellen die maximale Zeit bis zum Auslösen der Ereignismeldungen durch die letzte Drehgestellachse geschlossen wird. Hierzu wird der Zeitversatz mit dem Quotienten aus dem maximalen Achsabstand und dem Abstand der Ereignismelder multipliziert. Diese Zeitspanne tR wird als Zeitfenster definiert, innerhalb dessen mit dem Auftreten der Ereignismeldungen der letzten Radachse eines Drehgestells zu rechnen ist. Diese Ereignismeldungen lassen sich unschwer detektieren, weil ihr zeitlicher Versatz tVe gleich dem zeitlichen Versatz tVa der Ereignismeldungen der ersten Drehgestellachse ist. Vereinfachend wurde hierbei angenommen, daß sich die Fahrzeuggeschwindigkeit während des Passierens eines Drehgestelles an den beiden Ereignismeldern nicht merklich geändert hat. Rechnet man mit Änderungen, so dürfen sich auch die Versatz zeiten tVe und tVa geringfügig voneinander unterscheiden. Diese Differenzen sind aber nicht so groß, als daß nicht noch eine eindeutige Identifizierung der von der letzten Drehgestellachse veranlaßten Ereignismeldungen möglich wäre.

Läßt sich keine eindeutige Identifizierung der Ereignismeldungen der letzten Drehgestellachse herbeiführen, weil die beiden Versatzzeiten tVe und tVa zu unterschiedlich sind, so können die Ereignismeldungen der letzten Drehgestellachse nicht zur Geschwindigkeitsbestimmung herangezogen werden. Alle von den Ereignismeldern detektierten Ereignisse, die den vorgenannten zeitlichen Versatzbedingungen nicht genügen, werden ebenfalls nicht für die Geschwindigkeitsbestimmung herangezogen. Dies gilt im Ausführungsbeispiel der Figur 1 für die störungsbedingte Ereignismeldung BEM1. Durch das Ausblenden von Störbeeinflussungen bei der Geschwindigkeitsbestimmung von Eisenbahnfahrzeugen wird die Zuordnung der Ereignismeldungen zu den auslösenden Befahrungsereignissen beibehalten, so daß auch die folgenden Achsen des Fahrzeugs oder Fahrzeugverbandes in die Geschwindigkeitsbestimmung mit einbezogen werden können.

Um die Zuverlässigkeit beim Identifizieren der letzten Achse eines Drehgestelles zu steigern, ist es von Vorteil, die Summe der Zeitabstände aller von den einzelnen Ereignismeldern erkannten Beeinflussungen zwischen dem Passieren der ersten und der letzten Drehgestellachse aufzusummieren und mit dem entsprechenden Summenwert des jeweils anderen Ereignismelders zu vergleichen. Die Summe dieser Zeitmessungen muß bei beiden Ereignismeldern gleich sein, wenn es sich dabei um die gleichen Fahrzeugachsen handelt. Bezogen auf das Ausfuhrungsbeispiel der Figur 1 muß also die Summe der Zeitspannen t11 und t12 zwischen den vom Ereignismelder EM1 registrierten Ereignismeldungen gleich der Zeitspanne t21 zwischen den vom anderen Ereignismelder detektierten Ereignismeldungen sein. Wenn diese Bedingung eingehalten ist, handelt es sich bei den für die Geschwindigkeitsbestimmung freigegebenen Ereignismeldungen tatsächlich um den gleichen Achsen zuzuordnende Befahrungsereignisse.

Bei dem Ausführungsbeispiel der Figur 2 haben die beiden Ereignismelder neben den radabhängigen Ereignismeldungen je eine radunabhängige Beeinflussung B1EM1 und B1EM2 detektiert, wobei angenommen ist, daß diese Beeinflussungen durch das gleiche Ereignis, z. B. eine eingeschaltete Bremse, veranlaßt worden sind. Auch hier lassen sich die Befahrungsereignisse der letzten Drehgestellachse unschwer über ihren zeitlichen Versatz tVe bestimmen, der dem zeitlichen Versatz tVa der vom ersten Radsatz ausgelösten Befahrungsereignisse entspricht. Die Summe der Zeitabstände t12 und t13 für die von dem einen Ereignismelder detektierten Befahrungsereignisse entspricht der Summe der Zeitabstände t22 und t23 der vom anderen Ereignismelder detektierten Beeinflussung.

Bei dem Ausführungsbeispiel der Figur 3 ist angenommen, daß beide Ereignismelder während des Passieren eines Drehgestelles auch nicht radabhängige Ereignismeldungen detektiert haben, und zwar der eine Ereignismelder zwei Ereignismeldungen B2EM1 und B3EM1, während der andere Ereignismelder nur eine störungsbedingte Ereignismeldung B2EM2 festgestellt hat. Auch in diesem Fall lassen sich die Befahrungsereignisse der ersten und der letzten Achse bestimmen, indem das Zeitfenster tR auf das Vorhandensein von Ereignismeldungen R2EM1 und R2EM2 untersucht wird, deren zeitlicher Versatz tVe gleich dem zeitlichen Versatz tVa der von der ersten Radachse ausgelösten Ereignismeldungen R1EM1 und R1EM2 ist. Auch hier ist die Summe der Zeitabstände t14, t15 und t16 der von dem einen Ereignismelder detektierten Beeinflussungen gleich der Summe der Zeitabstände t24 und t25 der vom anderen Ereignismelder detektierten Beeinflussungen.

Als besonders vorteilhaft für die Anwendung des erfindungsgemäßen Verfahrens hat es sich erwiesen, wenn die Zeitwerte, die der Geschwindigkeitsbestimmung und/oder den Plausibilitätsprüfungen zugeführt werden, nicht an einer Flanke der Ereignismeldungen abgeleitet werden wie es sonst allgemein üblich ist, sondern jeweils an den Impulsmitten der Ereignissignale beginnen bzw. enden. Diese Impulsmitten lassen sich durch Digitalisierung der Ereignismeldungen mit anschließender Mittelwertbestimmung unschwer festlegen. Hierdurch lassen sich die Auswirkungen von Fahrzeugrädern mit unterschiedlichem seitlichen Versatz gegenüber den Fahrschienen und damit den Ereignismeldungen auf das Ansprechverhalten der Ereignismelder eliminieren.

Das erfindungsgemäße Verfahren zum Bestimmen der Geschwindigkeit von Eisenbahnfahrzeugen kommt selbstverständlich auch zur Anwendung bei Fahrzeugen ohne Drehgestellen, hat für diese aber meist keine Auswirkungen, weil das von der jeweils ersten Achse eines Fahrzeugs jeweils geöffnete Zeitfenster bereits geschlossen ist bevor eine Folgeachse dieses Fahrzeugs in die Meßstrecke eindringt. Anders liegen die Bedingungen dann, wenn der Abstand zwischen der letzten Achse eines Fahrzeugs und der ersten Achse eines Folgefahrzeugs sehr gering ist und in der Größenordnung des Achsabstands von Drehgestellen liegt. Durch die Anwendung des erfindungsgemäßen Verfahrens auf die von solchen Achsen ausgelösten Ereignismeldungen lassen sich etwaige Störungen auf die zum Feststellen der Ereignismeldungen verwendeten Sensoren, die zwischen den eigentlichen Sensormeldungen auftreten, eliminieren.

Das erfindungsgemäße Verfahren eliminiert in vorteilhafter Weise neben den durch Bremsen verursachten Störbeeinflussungen auch alle anderen radunabhängigen Störbeeinflussungen, soweit sie jeweils zwischen den für die erste und die letzten Achse eines Drehgestelles ausgelösten Ereignismeldungen von mindestens einen Ereignismelder erfaßt wurden.

## Patentansprüche

1. Verfahren zum Bestimmen der Geschwindigkeit von Eisenbahnfahrzeugen, insbesondere solchen mit Drehgestellen beim Passieren einer Meßstrecke mit zwei im Abstand angeordneten radbetätigten Ereignismeldern, deren durch jeweils das gleiche Fahrzeugrad veranlaßte Ereignismeldungen in Geschwindigkeitswerte umgesetzt werden,
**dadurch gekennzeichnet,**
daß zur Geschwindigkeitsbestimmung der Achsen von Drehgestellen oder Einzelrädern Zeitfenster (tR) festgelegt werden, innerhalb denen nach dem Erkennen einer ersten Achse eine folgende Achse die Ausgabe weiterer Ereignismeldungen veranlassen muß und daß die innerhalb eines durch ein voranlaufendes Fahrzeugrad geöffneten Zeitfensters ausgelösten weiteren Ereignismeldungen (R2EM1, R2EM2) jeweils paarweise der Geschwindigkeitsbestimmung zugeführt werden, wenn ihr zeitlicher Versatz (tVe) in seiner Zuordnung zu den beiden Ereignismeldern mindestens annähernd gleich dem zeitlichen Versatz (tVa) der das Zeitfenster öffnenden Ereignismeldungen (R1EM1, R1EM2) des voranlaufenden Fahrzeugrades ist.

2. Verfahren nach Anspruch 1,
**dadurch gekennzeichnet**,
daß die Bestimmung des Zeitfensters (tR) individuell für jedes Achspaar erfolgt, indem der Wert für den zeitlichen Versatz (tVa) der von der ersten Achse veranlaßten Ereignismeldungen (R1EM1, R1EM2) mit dem Quotienten aus einem angenommenen Maximalachsabstand und dem Abstand der Ereignismelder voneinander multipliziert wird.

3. Verfahren nach Anspruch 1 oder 2,
**dadurch gekennzeichnet,**
daß die Zeitmeßwerte einer auf eine erste Ereignismeldung (R1EM1, R1EM2) folgenden Ereignismeldung (R2EM1, R2EM2) nur dann für die Berechnung der Geschwindigkeit für ein diese Beeinflussung veranlassendes Ereignis herangezogen werden wenn die Summe der Zeitabstände (t11 + t12; t21) aller von den einzelnen Ereignismeldern etwa erkannten Ereignismeldungen (BEM1) zwischen diesen beiden Ereignismeldungen (R1EM1, R1EM2; R2EM1, R2EM2) mindestens annähernd gleich sind.

4. Verfahren nach Anspruch 1, 2 oder 3,
**dadurch gekennzeichnet,**
daß die Ereignismeldungen erfaßt und hieraus jeweils die Impulsmitten bestimmt werden und daß die Zeitwerte dieser Impulsmitten der Geschwindigkeitsbestimmung sowie ggf. der Plausibilitätsprüfungen zugeführt werden.

5. Verfahren nach Anspruch 4,
**dadurch gekennzeichnet,**
daß zum Bestimmen der Impulsmitten die Ereignismeldungen digitalisiert werden.

## Claims

1. Method for determining the speed of railway vehicles, in particular those with bogies, on passing a measurement section of track with two wheel-actuated event notification devices arranged at a distance from one another, whose event notifications triggered in each case by the same vehicle wheel can be converted into speed values, characterised in that in order to determine the speed of the axles of bogies or individual wheels time windows (tR) are specified, within which after the detection of a first axle a following axle has to initiate the release of further event notifications, and that the further event notifications (R2EM1, R2EM2) triggered within a time window opened by a preceding vehicle wheel are in each case used in pairs for the speed determination if the time displacement (tVe) is at least approximately equal in its matching with the two event notification devices to the time displacement (tVa) of the event notifications (R1EM1, R1EM2) of the preceding vehicle wheel opening the time window.

2. Method according to claim 1, characterised in that the determination of the time window (tR) is performed individually for each pair of axles, by multiplying the value of the time displacement (tVa) of the event notifications (R1EM1, R1EM2) triggered by the first axle by the quotient of an assumed maximum distance of the axles from one another and the distance of the event notification devices from one another.

3. Method according to claim 1 or 2, characterised in that the time measurement values of an event notification (R2EM1, R2EM2) following a first notification event (R1EM1, R1EM2) are only used to calculate the speed for an event triggering this influence if the sum of the time intervals (t11 + t12; t21) of all event notifications (BEM1) possibly recognised by the individual event notification devices between these two event notifications (R1EM1, R1EM2; R2EM1, R2EM2) are at least approximately equal.

4. Method according to claim 1, 2 or 3, characterised in that the event notifications are detected and the pulse mid-points are in each case determined from the latter, and that the time values of these pulse mid-points are used in the speed determination as well as optionally in the plausibility tests.

5. Method according to claim 4, characterised in that the event notifications are digitalised to determine the pulse mid-points.

## Revendications

1. Procédé pour déterminer la vitesse de véhicules ferroviaires, notamment ceux à bogies, lorsqu'ils passent sur une section de mesure comportant deux avertisseurs d'événement, disposés à distance l'un de l'autre et actionnés par une roue, dont les annonces d'événement, provoquées par la même roue de véhicule, sont transformées en valeurs de vitesse,
caractérisé en ce que
pour déterminer la vitesse des essieux de bogies ou de roues sans bogie, on fixe des fenêtres (tR) de temps, dans lesquelles, après qu'un premier essieu a été reconnu, un essieu suivant doit provoquer l'émission d'annonces d'événement supplémentaires et en ce que les annonces d'événement (R2EM1, R2EM2) supplémentaires déclenchées à l'intérieur d'une fenêtre de temps ouverte par une roue de véhicule précédente sont envoyées par paire à la détermination de vitesse, si leur décalage (tVe) dans le temps par rapport aux deux dispositifs avertisseurs d'événement est au moins approximativement égal au décalage (tVa) dans le temps des annonces d'événement (R1EM1,R1EM2) ouvrant la fenêtre de temps de la roue de véhicule précédente.

2. Procédé suivant la revendication 1,
caractérisé en ce que la détermination de la fenêtre (tR) de temps a lieu individuellement pour chaque paire d'essieux la valeur (tVa) de décalage dans le temps des annonces d'événement (R1EM1, R1EM2) provoquées par le premier essieu étant multipliée par le quotient d'une distance maximale supposée à la distance mutuelle des dispositifs avertisseurs d'événement.

3. Procédé suivant la revendication 1 ou 2,
caractérisé en ce que les valeurs de mesure de temps d'une annonce (R1EM1,R1EM2) d'événement suivant une première annonce (R2EM1, R2EM2) d'événement ne sont utilisées pour calculer la vitesse pour un événement provoquant cette influence que si les sommes des écarts (t11 + t12; t21) de temps entre ces deux annonces (R1EM1,R1EM2;R2EM1,R2EM2) d'événement de toutes les annonces (BEM1) d'événement à peu prés reconnues par les avertisseurs d'événement, sont au moins approximativement égales.

4. Procédé suivant la revendication 1, 2 ou 3,
caractérisé en ce que les annonces d'événement sont détectées et des milieux d'impulsion respectifs en sont déterminés et en ce que les valeurs de temps de ces milieux d'impulsion sont envoyées à la détermination de la vitesse ainsi que, éventuellement, à des dispositifs de vérification de la vraisemblance.

5. Procédé suivant la revendication 4,
caractérisé en ce que, pour déterminer les milieux d'impulsion, on numérise les annonces d'événement.
